# EUROPÄISCHE PATENTSCHRIFT

(11) **EP 2 871 115 B1**
(45) Veröffentlichungstag und Bekanntmachung des Hinweises auf die Patenterteilung: **10.01.2018**
(21) Anmeldenummer: 14189995.5
(22) Anmeldetag: 23.10.2014
(51) Int. Cl.: B62D 15/02, G05D 1/02

(54) **VERFAHREN ZUM ERMITTELN EINER FAHRKURVE, STEUERANORDNUNG ZUM DURCHFÜHREN DES VERFAHRENS UND FAHRZEUG MIT EINER DERARTIGEN STEUERANORDNUNG**
METHOD FOR DETERMINING A DRIVING CURVE, CONTROL ASSEMBLY FOR CARRYING OUT THE METHOD AND VEHICLE FITTED WITH SUCH A CONTROL ASSEMBLY
PROCÉDÉ DE DÉTERMINATION D'UNE COURBE DE TRANSPORT, SYSTÈME DE COMMANDE DESTINÉ À L'EXÉCUTION DU PROCÉDÉ ET VÉHICULE AUTOMOBILE DOTÉ D'UN TEL SYSTÈME DE COMMANDE

(30) Priorität: 12.11.2013 DE 102013223000
(43) Veröffentlichungstag der Anmeldung: 13.05.2015
(73) Patentinhaber: ROBERT BOSCH GMBH, 70442 Stuttgart (DE)
(72) Erfinder: VOGEL, Andreas, 31139 Hildesheim (DE)

(56) Entgegenhaltungen:
- DE-A1- 10 051 745
- DE-A1-102009 047 476
- DE-T2-602005 003 850

## Beschreibung

### Stand der Technik

In der Druckschrift DE 10 051 745 A1 wird ein Verfahren zur Schätzung der Krümmung eines ausgewählten, insbesondere in Fahrtrichtung vor einem Fahrzeug liegenden Wegeabschnitts, wobei der Verlauf des Wegs in Form von Stützpunkten in einer digitalen Karte abgelegt ist, vorgeschlagen, bei dem die Krümmung des ausgewählten Wegeabschnitts aus den Stützpunkten bestimmt wird. Ausführungsformen dieses Verfahrens sehen eine Krümmungsschätzung aufgrund einer Kreisapproximation oder eine Spline-Interpolation oder Spline-Approximation des tatsächlichen Wegeverlaufs aufgrund der Stützstellen vor. Insbesondere wird die Wegekrümmung in einem ausgewählten Stützpunkt derart bestimmt, dass ein Kreis durch den ausgewählten Stützpunkt, den dem ausgewählten Stützpunkt unmittelbar vorhergehenden Stützpunkt und den dem ausgewählten Stützpunkt unmittelbar folgenden Stützpunkt bestimmt wird, und dass das Maß der Krümmung als Kehrwert des Kreisradius bestimmt wird. Gemäß einer anderen Ausführungsform werden in unmittelbarer Nachbarschaft bestimmten Bedingungen unterliegender Stützpunkte virtuelle Stützpunkte eingefügt, die bei der Krümmungsberechnung berücksichtigt werden. So wird im Wegeverlauf vor und nach einem Stützpunkt, der einen abrupten Richtungswechsel im Wegeverlauf markiert, in einem vorgegebenen Abstand jeweils ein virtueller Stützpunkt gesetzt.

Aus der Druckschrift DE 60 2005 003 850 T2 ist Verfahren zur Echtzeit-Bestimmung der Gesamtzielbahn eines Kraftfahrzeugs bekannt, das sich auf einem Verkehrsweg fortbewegt, der eine Breite aufweist, die größer als diejenige des Fahrzeugs ist, bei welchem auf kontinuierliche Weise die Krümmung des Verkehrswegs an wenigstens einem sich vor dem Fahrzeug befindlichen Ort bewertet wird, wobei die Krümmung des sich vor dem Fahrzeug befindlichen Abschnitts bestimmt und die Gesamtkrümmung des Wegs in eine Vielzahl von Elementarkurven zerlegt wird, wobei für jede Elementarkurve eine Entwicklung einer Elementarabweichung zwischen der Zielbahn und der Mitte des Verkehrswegs als Funktion der Krümmung am betrachteten Ort bestimmt wird, und wobei die Entwicklungen der Elementarabweichungen kontinuierlich summiert werden, um die Gesamtzielbahn zu bestimmen.

In der Druckschrift DE 10 2009 047 476 A1 ist ein Verfahren zur Bestimmung einer Schnitttrajektorie vorgeschlagen, die ein Schneiden eines Kurvenabschnitts einer Fahrbahn durch ein Fahrzeug ermöglicht, bei dem eine Information über den Kurvenabschnitt empfangen und der Kurvenabschnitts in mindestens ein Kurvensegment mit einer Segmentlänge und einer Startkrümmung unterteilt wird, wobei das Kurvensegment entweder ein Geradensegment ist oder ein Kreisbogensegment ist oder ein Kurvensegment ist, dessen Krümmung eine Funktion einer Bogenlänge des Kurvensegments ist. Es folgt ein Bestimmen einer Schnitttrajektorie aus dem mindestens einen Kurvensegment, so dass die Schnitttrajektorie in einem bestimmten Punkt des Kurvenabschnitts eine vorbestimmte Ablage in Bezug auf eine Mitte der Fahrspur aufweist.

### Offenbarung der Erfindung

Die Erfindung hat die Aufgabe, ein vereinfachtes und genaueres Verfahren zum Ermitteln einer Fahrkurve zu schaffen. Ferner ist Aufgabe der Erfindung, eine Steueranordnung zum Durchführen eines solchen Verfahrens und ein Fahrzeug mit einer derartigen Steueranordnung zu schaffen.

Diese Aufgabe wird gelöst durch ein Verfahren zum Ermitteln einer Fahrkurve aus einer als ein durch Stützpunkte aufgespannter Polygonzug vorgegebenen Strecke, die mit einer ihr zugeordneten Fahrbahnbreite einen erlaubten Fahrstreifen bildet, und zum Lenken eines Fahrzeugs entlang der ermittelten Fahrkurve gemäß Anspruch 1.

Dabei werden in einem ersten Verfahrensschritt entlang der Strecke zwischen den Stützpunkten Lenkpunkte in vorgebbaren Abständen festgelegt. In einem zweiten Verfahrensschritt wird jedem Lenkpunkt und jedem Stützpunkt eine aus dem Verlauf der Strecke resultierende Krümmung zugeordnet, so dass sich entlang der Strecke eine Abfolge von Krümmungen ergibt. Die Strecke wird in einem dritten Verfahrensschritt als bisherige Fahrkurve festgelegt. Entlang der bisherigen Fahrkurve werden anschließend in einem vierten Verfahrensschritt die Stützpunkte und Lenkpunkte mit den größten Krümmungen ausgewählt. Durch Verteilen dieser größten Krümmungen auf die zugehörigen Stützpunkte bzw. Lenkpunkte und den zugehörigen Stützpunkten bzw. Lenkpunkten entlang der bisherigen Fahrkurve benachbarte Stützpunkte bzw. Lenkpunkte werden diese Krümmungen in einem fünften Verfahrensschritt verringert. Mit der dadurch gebildeten neuen Abfolge von Krümmungen wird in einem sechsten Verfahrensschritt eine neue Fahrkurve bestimmt. In einem siebten Verfahrensschritt wird geprüft, ob die neue Fahrkurve innerhalb des erlaubten Fahrstreifens liegt. Zutreffendenfalls wird in einem achten Verfahrensschritt die neue Fahrkurve als bisherige Fahrkurve festgelegt und wird die vorstehende Folge aus dem vierten bis siebten Verfahrensschritt erneut durchlaufen. Anderenfalls wird in einem neunten Verfahrensschritt durch insgesamtes Verschieben der neuen Fahrkurve in eine zum erlaubten Fahrstreifen mittlere Lage eine verschobene Fahrkurve erzeugt. Danach wird in einem zehnten Verfahrensschritt geprüft, ob die verschobene Fahrkurve innerhalb des erlaubten Fahrstreifens liegt. Zutreffendenfalls wird in einem elften Verfahrensschritt die verschobene Fahrkurve als bisherige Fahrkurve festgelegt und wird die vorgenannte Folge aus dem vierten bis siebten Verfahrensschritt erneut durchlaufen. Anderenfalls bildet die bisherige Fahrkurve in einem zwölften Verfahrensschritt die ermittelte Fahrkurve. Das Fahrzeug wird in einem dreizehnten Verfahrensschritt entlang dieser ermittelten Fahrkurve gelenkt.

Bevorzugt ist dabei die in Form des Polygonzugs vorgegebene Strecke von einer digitalen Straßenkarte umfasst und wird aus dieser entnommen. Diese Strecke, die an den Stützpunkten im Regelfall Knickstellen mit unstetigen Richtungsänderungen, d.h. mit dort unendlich hohen Krümmungswerten, im Folgenden kurz als Krümmungen bezeichnet, aufweist, dient als Grundlage, d.h. Anfangssituation, des daran durchzuführenden, erfindungsgemäßen Verfahrens zum Ermitteln einer Fahrkurve mit an diesen Stützpunkten verteilten und damit verringerten Krümmungen. Demgemäß wird auch im dritten Verfahrensschritt die Strecke als bisherige Fahrkurve und damit als Anfangssituation des nachfolgend durchgeführten Vorgangs einer Fahrkurvenoptimierung, die das Ziel hat, die Krümmungen und insbesondere deren Maxima zu verringern, festgelegt. Als Fahrkurve wird dabei stets eine Linie bezeichnet, entlang derer das Fahrzeug gelenkt, d.h. bewegt wird.

Diese Strecke wird im ersten Verfahrensschritt dadurch auf- und für das Ausführen der weiteren Verfahrensschritte vorbereitet, dass die einzelnen Abschnitte der Strecke zwischen den Stützpunkten durch zusätzlich eingefügte Lenkpunkte unterteilt werden. Die Abstände der Lenkpunkte sind dabei nach Zweckmäßigkeit beliebig vorgebbar, jedoch sind sie zumindest in der Nachbarschaft der Stützpunkte bevorzugt in der Größenordnung der vorgegebenen Fahrbahnbreite oder geringer gewählt, um eine feinere Verteilung der Krümmungen im Bereich der Stützpunkte zu erzielen. Damit lässt sich eine bessere Glättung der genannten Knickstellen erreichen.

Die Krümmung an einem Lenk- oder Stützpunkt ergibt sich aus dem Verlauf der Strecke oder, nach einem Verteilen der Krümmungen, dem Verlauf der Fahrkurve beidseitig des betrachteten Lenk- bzw. Stützpunktes und stellt eine Richtungsänderung der Strecke bzw. der Fahrkurve dar. Aus der Krümmung, d.h. der Richtungsänderung der Strecke bzw. Fahrkurve ergibt sich ein am Fahrzeug einzustellender Lenkwinkel, hervorgerufen durch eine durch das Fahrzeug bzw. seinen Fahrer auszuführende Lenkbewegung, die umso stärker ist, je größer die Krümmung ist. Die Krümmungsänderung ist ein Maß für die auszuführende Lenkbewegung; diese führt zu dem am Fahrzeug einzustellenden, d.h. zu ändernden Lenkwinkel.

Zum Auswählen der Stützpunkte und Lenkpunkte mit den größten Krümmungen im vierten Verfahrensschritt ist es vorteilhaft, entlang der gesamten Strecke bzw. Fahrkurve das Maximum der Krümmungen, d.h. der Richtungsänderungen, zu ermitteln, oder aber alle Krümmungen oberhalb eines vorgebbaren Grenzwerts zu erfassen. Im ersteren Fall wird ein Verteilen nur jeweils des Maximums der Krümmungen vorgenommen. Im letzteren Fall wird bevorzugt die gesamte Strecke bzw. Fahrkurve auf der Suche nach die genannte Bedingung erfüllenden Krümmungen durchlaufen, und es werden an allen dabei aufgefundenen Stütz- bzw. Lenkpunkten die Krümmungen in einem Durchlauf des vierten bis siebten Verfahrensschritts verteilt. In diesem Zusammenhang ist unter dem Maximum der Krümmungen stets das Maximum des Betrags der Krümmungen verstanden.

Das Verteilen der Krümmungen selbst wird dadurch bewirkt, dass eine starke Krümmung an einem zugehörigen Stütz- bzw. Lenkpunkt durch eine vorbestimmte bzw. gewählte Folge von Krümmungen am zugehörigen Stütz- bzw.

Lenkpunkt sowie an den entlang der bisherigen Fahrkurve voraufgehenden und/oder nachfolgenden Lenk- bzw. Stützpunkten ersetzt wird. Als zugehöriger Stütz- bzw. Lenkpunkt ist derjenige bezeichnet, an dem die zu verringernde Krümmung vorliegt. Dieses Verteilen kann sich wahlweise auf einen oder mehrere dem zugehörigen Stütz- bzw. Lenkpunkt voraufgehende und/oder nachfolgende Lenk- bzw. Stützpunkte erstrecken und damit eine noch geringere Krümmung in diesem Bereich der Fahrkurve in einem einzigen Verfahrensschritt erreicht werden. Dabei wird bevorzugt die Folge von Krümmungen aus dem Wert der starken Krümmung vor dem Verteilen bestimmt. Beim Verteilen der größten Krümmungen auf die zugehörigen Stützpunkte bzw. Lenkpunkte und die entlang der bisherigen Fahrkurve benachbarten Stützpunkte bzw. Lenkpunkte wird eine Lageänderung der neuen Fahrkurve gegenüber der bisherigen Fahrkurve ausschließlich im Bereich der Stützpunkte bzw. Lenkpunkte, auf die sich das Verteilen erstreckt, vorgenommen. Eine mit dem Verteilen der Krümmungen erzielte Glättung der Fahrkurve erstreckt sich somit ausschließlich auf den Bereich derjenigen Stütz- bzw. Lenkpunkte, auf die die Krümmungen verteilt werden. In ihren übrigen Abschnitten bleibt die Fahrkurve bei dem Verteilen der Krümmungen unverändert. Das vereinfacht die Prüfung und Anpassung der Fahrkurve an den erlaubten Fahrstreifen sehr wesentlich und ermöglicht eine beschleunigte Abarbeitung des Verfahrens.

Beim Verteilen der Krümmungen wird eine Krümmung auf den zugehörigen Stützpunkt bzw. Lenkpunkt und zumindest auf den entlang der bisherigen Fahrkurve unmittelbar voraufgehenden und nachfolgenden Stützpunkt bzw. Lenkpunkt verteilt.

Dazu werden folgende vom vorstehend beschriebenen fünften Verfahrensschritt umfasste Teilschritte ausgeführt.

Im ersten dieser Teilschritte wird die Krümmung am voraufgehenden und nachfolgenden Stützpunkt bzw. Lenkpunkt um je die Hälfte einer vorbestimmten Krümmungsänderung vergrößert, und im zweiten Teilschritt wird die Krümmung am zugehörigen Stützpunkt bzw. Lenkpunkt um die vorbestimmte Krümmungsänderung verringert. Dabei wird im dritten Teilschritt ein Anfangswert der vorbestimmten Krümmungsänderung derart bemessen, dass die zweite Ableitung der Krümmung entlang der Fahrkurve am zugehörigen Stützpunkt bzw. Lenkpunkt Null ist. Im vierten Teilschritt wird ein Maximum einer durch die vorbestimmte Krümmungsänderung bewirkten Lageänderung der neuen Fahrkurve im Bereich des voraufgehenden, zugehörigen und nachfolgenden Stützpunkts bzw. Lenkpunkts ermittelt. Im fünften Teilschritt wird geprüft, ob die neue Fahrkurve an diesem Maximum der Lageanderung außerhalb des erlaubten Fahrstreifens liegt. Zutreffendenfalls wird in einem sechsten Teilschritt durch Verringerung der vorbestimmten Krümmungsänderung das Maximum der Lageänderung auf eine Lage innerhalb des erlaubten Fahrstreifens verringert. Im siebten Teilschritt wird die vorbestimmte und gegebenenfalls im sechsten Teilschritt verringerte Krümmungsänderung der Bestimmung der neuen Fahrkurve zu Grunde gelegt, d.h. falls die Krümmungsänderung im sechsten Teilschritt verringert wurde, wird die verringerte Krümmungsänderung der Bestimmung der neuen Fahrkurve zu Grunde gelegt, ansonsten die unveränderte vorbestimmte Krümmungsänderung. Diese Bestimmung erfolgt im oben beschriebenen sechsten Verfahrensschritt.

Bei einer Ausführungsform erfolgt das Verteilen der Krümmung auf genau den zugehörigen, den einen voraufgehenden und den einen nachfolgenden Stütz- bzw. Lenkpunkt. In einer Abwandlung könnte das Verteilen z.B. auf den zugehörigen und die zwei voraufgehenden und nachfolgenden Stütz- bzw. Lenkpunkte erstreckt werden, usw. Insbesondere sind dabei der zugehörige, der voraufgehende bzw. die voraufgehenden und der nachfolgende bzw. die nachfolgenden Stütz- bzw. Lenkpunkte zueinander wenigstens nahezu gleich beabstandet.

Das Bestimmen der neuen Fahrkurve aus der durch dieses Verteilen der Krümmungen gebildeten neuen Abfolge von Krümmungen fußt darauf, dass Krümmungen Richtungsänderungen der Fahrkurve und damit des sich entlang derselben bewegenden Fahrzeugs bedeuten, die grundsätzlich an jedem der Lenk- und Stützpunkte möglich sind. Aus diesen Richtungsänderungen ergeben sich Lageänderungen der neuen Fahrkurve, d.h. die neue Fahrkurve verlagert sich gegenüber der bisherigen Fahrkurve. Diese Verlagerungen werden aus den Krümmungen bestimmt.

Die im siebten Verfahrensschritt vorgenommene Prüfung, ob diese Verlagerungen die neue Fahrkurve aus dem erlaubten Fahrstreifen herausführen, erfolgt durch Bestimmen der Abstände, d.h. Lageänderungen, der neuen Fahrkurve von der von der bisherigen Fahrkurve in allen Stütz- und Lenkpunkten, zumindest allen Stütz- und Lenkpunkten, in denen eine Verlagerung gegenüber der bisherigen Fahrkurve stattgefunden hat. In derselben Weise wird im zehnten Verfahrensschritt die entsprechende Prüfung an der verschobenen Fahrkurve vorgenommen.

Im Gegensatz zu der vorbeschriebenen Verlagerung der Fahrkurve, die in verschiedenen Stütz- bzw. Lenkpunkten unterschiedlich erfolgt oder erfolgen kann, steht das im neunten Verfahrensschritt vorgenommene insgesamte Verschieben, bei dem die gesamte neue Fahrkurve gleichmäßig im Ganzen so verschoben wird, dass die Kontur der neuen Fahrkurve in sich unverändert bleibt, d.h. alle Teile der Fahrkurve erfahren übereinstimmende Lageänderungen. Das insgesamte Verschieben ist unabhängig von den Krümmungen und ändert diese nicht. In der zum erlaubten Fahrstreifen mittleren Lage nimmt die verschobene Fahrkurve gleiche Entfernungen von Berandungen des erlaubten Fahrstreifens ein, insbesondere dort, wo die verschobene Fahrkurve am stärksten von der Strecke abweicht und damit die größte Gefahr eines Verlassens des entlang der Strecke verlaufenden erlaubten Fahrstreifens besteht.

Die im vorstehenden eingeführten Begriffe der ermittelten, bisherigen, neuen und verschobenen Fahrkurve bezeichnen Zwischen- bzw. Endergebnisse der vorbeschriebenen Fahrkurvenoptimierung, d.h. Krümmungsglättung.

Die Erfindung ermöglicht ein einfaches, schnelles und genaues Ermitteln einer Fahrkurve mit optimierter Verteilung der Krümmungen, d.h. mit minimal möglichen Krümmungen, entlang des Verlaufs der Fahrkurve. Eine derartig optimierte Fahrkurve verringert die entlang der Fahrkurve nötigen Lenkbewegungen und ermöglicht dem Fahrer und Fahrzeug eine höhere Kurvengeschwindigkeit. Das erfindungsgemäße Verfahren ist ferner unempfindlich gegen fehlerhaft angegebene Stützpunkte der Strecke, benötigt nur wenige Steuerparameter und ist ohne Hilfs- oder Zusatzannahmen ortstreu, d.h. liefert eine ermittelte Fahrkurve, die vom Fahrzeug in der Realität auch befahrbar ist.

Nach einer Ausführungsform des erfindungsgemäßen Verfahrens stimmen die vorgebbaren Abstände der Lenkpunkte zueinander entlang der Strecke mit Abständen der Stützpunkte zu ihren benachbarten Lenkpunkten wenigstens nahezu überein. Die Strecke wird somit durch die Anordnung der Stütz- und der Lenkpunkte in untereinander möglichst gleiche Abschnitte unterteilt. Diese Wahl der Abstände bewirkt eine die Durchführung des Verfahrens erleichternde und vereinfachende, gleichmäßig verteilte Lage der Lenkpunkte zueinander und insbesondere zu benachbarten Stützpunkten.

Werden zur Erläuterung des obigen Verfahrensablaufs die Krümmungen am voraufgehenden, zugehörigen und nachfolgenden Stütz- bzw. Lenkpunkt entlang der bisherigen Fahrkurve, wie sie zu Beginn des fünften Verfahrensschritts vorliegen, mit cv, cz bzw. cn und wird die Krümmungsänderung mit m bezeichnet, erfolgt somit im ersten der obigen Teilschritte eine Vergrößerung der Krümmungen am voraufgehenden und nachfolgenden Stütz- bzw. Lenkpunkt von cv bzw. cn auf die neuen Werte cv+0,5*m bzw. cn+0,5*m, wobei die obige gleichmäßig verteilte Lage der Lenkpunkte zueinander und insbesondere zu benachbarten Stützpunkten vorausgesetzt ist. Im zweiten Teilschritt wird die Krümmung am zugehörigen Stütz- bzw. Lenkpunkt von cz auf cz-m verringert. Die zweite Ableitung der Krümmung entlang der Fahrkurve am zugehörigen Stütz- bzw. Lenkpunkt cz beträgt nach den Rechenregeln der Numerik vor der Änderung der Krümmungen: cz" = 0,5*(cn-2*cz+cv) und nach Änderung der Krümmungen: cz" = 0,5*(cn+0,5*m-2*(cz-m)+cn+0,5*m). Wird diese zweite Ableitung zu Null gesetzt, ergibt sich als Bemessung der Krümmungsänderung m im dritten Teilschritt: m = (2*cz-cv-cn)/3. Mit dieser Bemessung ergibt sich eine Lageänderung der neuen Fahrkurve gegenüber der bisherigen Fahrkurve von angenähert 0,5*m. Außerdem bedeutet das Verschwinden der zweiten Ableitung der Krümmung der Fahrkurve, dass diese an dem zugehörigen Stütz- bzw. Lenkpunkt auf einem Kreis oder einer Klothoide verläuft, d.h. auf Kurven mit konstanter bzw. linear zu- oder abnehmender Krümmung. Derartige Kurven sind besonders angenehm zu fahren, da die dafür durch das Fahrzeug bzw. seinen Fahrer auszuführenden Lenkbewegungen gleichförmig sind; abrupte Lenkbewegungen werden vermieden.

Da je nach Größe der Abstände der Stütz- bzw. Lenkpunkte untereinander und der Krümmungen die beschriebene Lageänderung der neuen Fahrkurve gegenüber der bisherigen Fahrkurve von 0,5*m die Berandungen des erlaubten Fahrstreifens überschreiten können, wird dies im fünften Teilschritt überprüft. Liegt eine Überschreitung vor, wird also die Breite des erlaubten Fahrstreifens überschritten, wird im sechsten Teilschritt die Krümmungsänderung m gegenüber der obigen Bemessung soweit verringert, dass auch nach der Lageänderung die neue Fahrkurve im erlaubten Fahrstreifen bleibt. Der daraus resultierende Verlauf der neuen Fahrkurve entspricht zwar nicht mehr dem Ideal des Kreises oder der Klothoide, ist diesem aber bestmöglich angenähert. Bei einer Ausführungsform werden die vorstehend beschriebenen Teilschritte nur an den Stütz- bzw. Lenkpunkten mit den größten Krümmungen ausgeführt, wodurch der Aufwand für das Durchführen des Verfahrens gering gehalten wird. In Abwandlung dessen, wenn nicht nur gezielt die größten Krümmungen verteilt werden sollen, sondern die gesamte Fahrkurve untersucht werden soll, werden fortlaufend immer drei aufeinanderfolgende Stütz- bzw. Lenkpunkte mit den vorbeschriebenen Teilschritten untersucht und wird dabei die gesamte Fahrkurve durchlaufen.

In einer Abwandlung sind die vorgebbaren Abstände der den Stützpunkten benachbarten Lenkpunkte zueinander zur Verringerung des Aufwands für das Durchführen des Verfahrens geringer vorgegeben als in den geraden, mittleren Abschnitten der Strecke zwischen den Stützpunkten.

In einer anderen Ausführungsform des erfindungsgemäßen Verfahrens werden die vorgebbaren Abstände der Lenkpunkte zueinander und zu den Stützpunkten entlang der Strecke auf wenigstens einen ersten Wert festgesetzt und werden diese Abstände während des Durchführens des Verfahrens verringert. Dies stellt eine weitere Variation zur Verringerung des Aufwands für das Durchführen des Verfahrens dar. Die Abstände der Lenkpunkte werden zur Optimierung der Fahrkurve variiert, wobei mit einem ggf. entlang der Strecke veränderlichen Anfangswert der Abstände begonnen wird und die Abstände im Laufe des Durchführens des Verfahrens verringert werden. Bevorzugt ist dieses Verringern der Abstände als weiterer Optimierungsschritt zusätzlich zum Verteilen der Krümmungen und zum Verschieben der Fahrkurve vorgesehen und wird insbesondere dann durchgeführt, wenn das Verteilen und Verschieben zu einer mit dem Anfangswert erzielbaren optimalen Fahrkurve geführt haben.

Die oben genannte Aufgabe wird weiterhin gelöst durch eine Steueranordnung ausgebildet zum Durchführen des vorbeschriebenen Verfahrens, wobei der Steueranordnung Daten zuführbar sind, die eine als durch Stützpunkte aufgespannter Polygonzug vorgegebene Strecke sowie eine dieser Strecke zugeordnete Fahrbahnbreite beschreiben, wobei Strecke und zugeordnete Fahrbahnbreite einen erlaubten Fahrstreifen bilden. Die Steueranordnung umfasst eine Diskretisierungsstufe zum Festlegen von Lenkpunkten in vorgebbaren Abständen entlang der Strecke zwischen den Stützpunkten und zum Zuordnen einer aus dem Verlauf der Strecke resultierenden Krümmung zu jedem Lenkpunkt und jedem Stützpunkt, so dass sich entlang der Strecke eine Abfolge von Krümmungen ergibt. Die Steueranordnung umfasst weiter eine Fahrkurvenermittlungsstufe, die enthält: eine Speicherstufe zum Festlegen und/oder Speichern der Strecke, der neuen Fahrkurve oder der verschobenen Fahrkurve als bisherige Fahrkurve und zum Eingeben der bisherigen Fahrkurve in eine Rechenstufe, die Rechenstufe, eine erste Prüfstufe zum Prüfen, ob die neue Fahrkurve innerhalb des erlaubten Fahrstreifens liegt, eine zweite Prüfstufe zum Erzeugen einer verschobenen Fahrkurve durch insgesamtes Verschieben der neuen Fahrkurve in eine zum erlaubten Fahrstreifen mittlere Lage und zum Prüfen, ob die verschobene Fahrkurve innerhalb des erlaubten Fahrstreifens liegt, und eine Ausgabestufe zum Ausgeben der bisherigen Fahrkurve als ermittelte Fahrkurve. Die Rechenstufe ist zum Auswählen der Stützpunkte und Lenkpunkte mit den größten Krümmungen entlang der bisherigen Fahrkurve, Verteilen dieser größten Krümmungen auf die zugehörigen Stützpunkte bzw. Lenkpunkte und den zugehörigen Stützpunkten bzw. Lenkpunkten entlang der bisherigen Fahrkurve benachbarte Stützpunkte bzw. Lenkpunkte und dadurch Verringern dieser Krümmungen und Bestimmen einer neuen Fahrkurve mit der dadurch gebildeten neuen Abfolge von Krümmungen ausgebildet. Die Steueranordnung umfasst auch eine Lenkeinrichtung zum Lenken eines Fahrzeugs entlang der ermittelten Fahrkurve.

Die Speicherstufe in der Fahrkurvenermittlungsstufe erhält dazu die die Strecke bzw. die die neue oder die verschobene Fahrkurve beschreibenden Daten von der Diskretisierungsstufe bzw. der ersten bzw. zweiten Prüfstufe zugeführt und leitet diese als bisherige Fahrkurve an die Rechenstufe weiter. Von der Rechenstufe werden die die neue Fahrkurve beschreibenden Daten an die erste Prüfstufe und von dieser zum Ausführen der Verschiebung an die zweite Prüfstufe geleitet. Von der zweiten Prüfstufe werden die die ermittelte Fahrkurve beschreibenden Daten der Lenkeinrichtung zugeführt. Die Fahrkurvenermittlungsstufe ist ausgebildet zum Durchführen des dritten bis zwölften Verfahrensschritts. Dabei ist die Speicherstufe ausgebildet zu dem im achten und elften Verfahrensschritt erfolgenden Initiieren des erneuten Durchlaufens des vierten bis siebten Verfahrensschritts.

Die erfindungsgemäße Steueranordnung ermöglicht auf einfache Weise ein präzises und sicheres Lenken eines Fahrzeugs mit allen Vorteilen des durchgeführten Verfahrens.

Die oben genannte Aufgabe wird auch gelöst durch ein Fahrzeug, das eine Steueranordnung der beschriebenen Art aufweist und dadurch in der beschriebenen, vorteilhaften Weise lenkbar ist. Bevorzugt ist ein solches Fahrzeug autonom, d.h. ohne Eingriff eines Fahrers, lenkbar. Schließlich wird die Aufgabe gelöst durch ein Computerprogrammprodukt, aufweisend Programmteile zum Ausführen des beschriebenen Verfahrens, durch eine maschinenlesbare, insbesondere computerlesbare, Datenstruktur, erzeugt durch ein solches Verfahren und/oder durch mindestens ein derartiges Computerprogrammprodukt, und durch einen maschinenlesbaren, insbesondere computerlesbaren, Datenträger, auf dem mindestens ein solches Computerprogrammprodukt aufgezeichnet und/oder gespeichert ist und/oder auf dem mindestens eine solche Datenstruktur zum Abruf bereit gehalten ist. Damit ist die Steueranordnung vorteilhaft als digitale Signalverarbeitungsanordnung ausgestaltbar.

Ausführungsbeispiele der Erfindung sind in der Zeichnung dargestellt und werden im nachfolgenden näher beschrieben, wobei übereinstimmende Elemente in allen Figuren mit denselben Bezugszeichen versehen sind und eine wiederholte Beschreibung dieser Elemente weggelassen wird. Es zeigen:
Figur 1 ein grobschematisches Flussdiagram eines Beispiels eines erfindungsgemäßen Verfahrens und einer erfindungsgemäßen Steueranordnung,
Figur 2 eine Abwandlung des Beispiels des Verfahrens gemäß Figur 1 und
Figur 3 eine grobschematische Darstellung einer beispielhaften Fahrkurve.

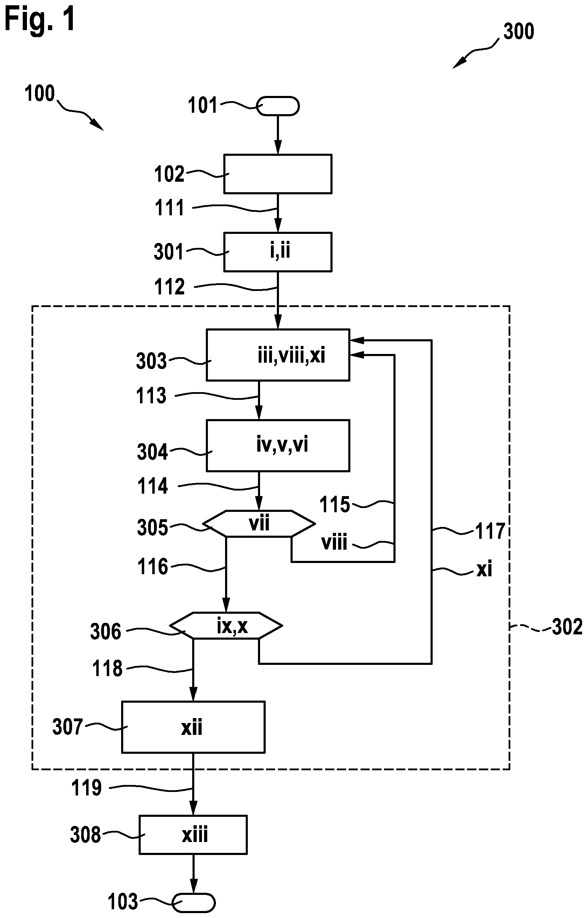

Das Flussdiagramm des Beispiels eines erfindungsgemäßen Verfahrens 100 in Figur 1 stellt zugleich ein Blockschaltbild bzw. Signallaufdiagramm eines dazu korrespondierenden Beispiels einer erfindungsgemäßen Steueranordnung 300 zum Durchführen des Verfahrens 100 dar. Die Steueranordnung 300 umfasst eine Diskretisierungsstufe 301, der über eine erste Verbindung 111 durch einen Block 102 symbolisierte Daten vorgegeben werden, die einen durch eine zwischen Stützpunkten aufgespannte, polygonförmige Strecke und eine zugeordnete Fahrbahnbreite gebildeten erlaubten Fahrstreifen beschreiben. Im Rahmen des Verfahrens 100, das beim Start 101 begonnen wird, werden durch die Diskretisierungsstufe 301 im ersten Verfahrensschritt i Lenkpunkte in vorgebbaren Abständen entlang der Strecke zwischen den Stützpunkten festgelegt und wird im zweiten Verfahrensschritt ii jedem Lenkpunkt und jedem Stützpunkt eine aus dem Verlauf der Strecke resultierende Krümmung zugeordnet, so dass sich entlang der Strecke eine Abfolge von Krümmungen ergibt. Über eine zweite Verbindung 112 werden alle diese Daten zu der Strecke einer Speicherstufe 303 innerhalb einer Fahrkurvenermittlungsstufe 302 zugeführt, wo im dritten Verfahrensschritt iii die Strecke als bisherige Fahrkurve festgelegt wird. Über eine dritte Verbindung 113 werden die Daten der bisherigen Fahrkurve einer Rechenstufe 304 zugeleitet und darin im vierten Verfahrensschritt iv entlang der bisherigen Fahrkurve die Stützpunkte und Lenkpunkte mit den größten Krümmungen ausgewählt und im fünften Verfahrensschritt v durch Verteilen dieser größten Krümmungen auf die zugehörigen Stützpunkte bzw. Lenkpunkte und den zugehörigen Stützpunkten bzw. Lenkpunkten entlang der bisherigen Fahrkurve benachbarte Stützpunkte bzw. Lenkpunkte diese Krümmungen verringert. Im sechsten Verfahrensschritt vi wird mit der dadurch gebildeten neuen Abfolge von Krümmungen eine neue Fahrkurve bestimmt. Die Daten der neuen Fahrkurve gelangen über eine vierte Verbindung 114 in eine erste Prüfstufe 305, in der im siebten Verfahrensschritt vii geprüft wird, ob die neue Fahrkurve innerhalb des erlaubten Fahrstreifens liegt. Zutreffendenfalls wird die neue Fahrkurve im achten Verfahrensschritt viii über eine fünfte Verbindung 115 der Speicherstufe 303 zugeführt und dort als bisherige Fahrkurve festgelegt, worauf die Verfahrensschritte iv bis vii erneut durchlaufen werden. Anderenfalls wird die neue Fahrkurve über eine sechste Verbindung 116 einer zweiten Prüfstufe 306 zugeleitet und darin im neunten Verfahrensschritt ix durch insgesamtes Verschieben der neuen Fahrkurve in eine zum erlaubten Fahrstreifen mittlere Lage eine verschobene Fahrkurve erzeugt und im zehnten Verfahrensschritt x geprüft, ob die verschobene Fahrkurve innerhalb des erlaubten Fahrstreifens liegt. Ist dies der Fall, wird die verschobene Fahrkurve im elften Verfahrensschritt xi über eine siebte Verbindung 117 der Speicherstufe 303 zugeführt und dort als bisherige Fahrkurve festgelegt. Die Verfahrensschritte iv bis vii werden nun erneut durchlaufen. Ist dies nicht der Fall, bildet die bisherige Fahrkurve die ermittelte Fahrkurve und wird im zwölften Verfahrensschritt xii über eine achte Verbindung 118 einer Ausgabestufe 307 und von dieser über eine neunte Verbindung 119 von der Fahrkurvenermittlungsstufe 302 einer Lenkeinrichtung 308 zugeführt, von der im dreizehnten Verfahrensschritt xiii das Fahrzeug entlang der ermittelten Fahrkurve gelenkt wird. Danach endet das Verfahren 100 am Endpunkt 103.

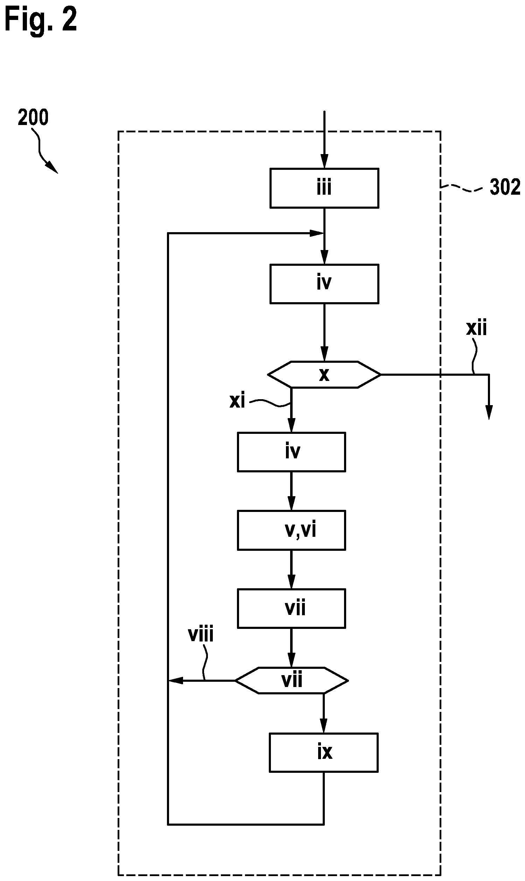

Im Flussdiagramm der Abwandlung 200 des Verfahrens nach Figur 2 sind nur die in der Fahrkurvenermittlungsstufe 302 ausgeführten dritten bis zwölften Verfahrensschritte iii bis xii eingezeichnet, wie sie den Teilen des nachfolgend beschriebenen Verfahrensablaufs entsprechen. Dieser Beschreibung sind die Bezeichnungen iii bis xii der betreffenden Verfahrensschritte zur Erläuterung in Striche eingefasst beigefügt. Nach Festlegen der Strecke als bisherige Fahrkurve - iii - wird diese entlang ihres gesamten Verlaufs auf Stellen, d.h. Stütz- bzw. Lenkpunkte, abgesucht - iv -, an denen die zweite Ableitung zwischen drei aufeinanderfolgenden Krümmungen ungleich Null ist und eine Lageänderung der bisherigen Fahrkurve gegenüber der Strecke kleiner ist als die Fahrbahnbreite. An diesen Stellen kann eine Verteilung der Krümmung erfolgen und damit die zweite Ableitung verringert werden. Sind alle zweiten Ableitungen kleiner als ein vorgegebener Grenzwert und erreichen die Lageänderungen die Fahrbahnbreite - x -, wird die ermittelte Fahrkurve ausgegeben - xii -, ansonsten - xi - wird von den gefundenen Stellen diejenige mit der betragsmäßig größten zweiten Ableitung, d.h. Krümmung, gewählt - iv - und dort eine Krümmungsverteilung - v - durchgeführt, wodurch sich dort der Verlauf der Fahrkurve verlagert. Nun wird von allen Verlagerungen entlang der Fahrkurve gegenüber der Strecke das Minimum und das Maximum gesucht und geprüft, ob diese die Fahrbahnbreite erreichen - vii -. Ist das nicht der Fall, wird durch insgesamtes Verschieben der neuen Fahrkurve in eine zum erlaubten Fahrstreifen mittlere Lage eine verschobene Fahrkurve erzeugt - ix -, ansonsten wird die Fahrkurve nicht verschoben - viii - als bisherige Fahrkurve einem erneuten Verfahrensdurchlauf zugeführt.

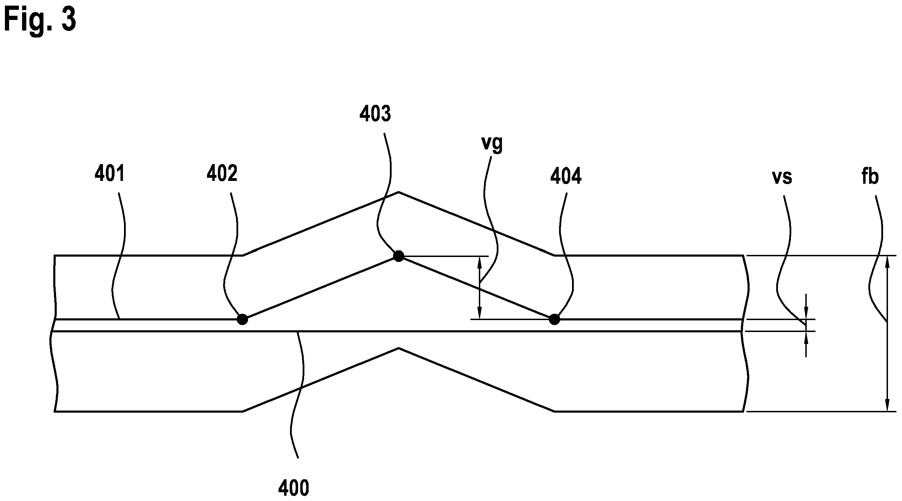

Figur 3 zeigt grobschematisch einen Abschnitt 400 einer beispielhaften Fahrkurve mit einer Strecke 401, die einen durch einen ersten, zweiten und dritten Stützpunkt 402, 403, 404 aufgespannten Polygonzug bildet und der eine Fahrbahnbreite fb eines erlaubten Fahrstreifens zugeordnet ist. Durch eine Verteilung der Krümmung am Stützpunkt 403 ergibt sich eine Verlagerung vg der Fahrkurve 400 an diesem Stützpunkt 403 gegenüber der Strecke 401 und z.B. durch eine nachfolgende Verschiebung vs eine weitere Änderung des Verlaufs der Fahrkurve 400 in die dargestellte Lage. Aufgrund der Größenverhältnisse wird die Krümmung am Stützpunkt 403 vollständig eingeebnet, da dies ohne Verlassen der erlaubten Fahrbahnbreite fb möglich ist. Die so erzielte Fahrkurve 400 ist damit an dieser Stelle frei von Krümmungen und dafür erforderlichen Lenkbewegungen. Für den Fall, dass die Krümmungen der Strecke an dieser Stelle durch einen Fehler in der Angabe des Stützpunktes 403, z.B. aus einer digitalen Karte entnommen, resultieren, ist durch das erfindungsgemäße Verfahren dieser Fehler ebenfalls ausgeglichen.

## Patentansprüche

1. Verfahren (100; 200) zum Ermitteln einer Fahrkurve (400) aus einer als ein durch Stützpunkte (402, 403, 404) aufgespannter Polygonzug vorgegebenen Strecke (401), die mit einer ihr zugeordneten Fahrbahnbreite (fb) einen erlaubten Fahrstreifen bildet (102), und zum Lenken eines Fahrzeugs entlang der ermittelten Fahrkurve (400), wobei
(i) entlang der Strecke (401) zwischen den Stützpunkten (402, 403, 404) Lenkpunkte in vorgebbaren Abständen festgelegt werden,
(ii) jedem Lenkpunkt und jedem Stützpunkt eine aus dem Verlauf der Strecke (401) resultierende Krümmung zugeordnet wird, so dass sich entlang der Strecke (401) eine Abfolge von Krümmungen ergibt,
(iii) die Strecke (401) als bisherige Fahrkurve festgelegt wird,
(iv) entlang der bisherigen Fahrkurve die Stützpunkte (402, 403, 404) und Lenkpunkte mit den größten Krümmungen ausgewählt werden,
(v) durch Verteilen dieser größten Krümmungen auf die zugehörigen Stützpunkte (402, 403, 404) bzw. Lenkpunkte und den zugehörigen Stützpunkten (402, 403, 404) bzw. Lenkpunkten entlang der bisherigen Fahrkurve benachbarte Stützpunkte (402, 403, 404) bzw. Lenkpunkte, diese Krümmungen verringert werden,
(vi) mit der dadurch gebildeten neuen Abfolge von Krümmungen eine neue Fahrkurve bestimmt wird,
(vii) geprüft wird, ob die neue Fahrkurve innerhalb des erlaubten Fahrstreifens liegt,
(viii) zutreffendenfalls die neue Fahrkurve als bisherige Fahrkurve festgelegt wird und die Verfahrensschritte (iv) bis (vii) erneut durchlaufen werden,
(ix) anderenfalls durch insgesamtes Verschieben (vs) der neuen Fahrkurve in eine zum erlaubten Fahrstreifen mittlere Lage eine verschobene Fahrkurve erzeugt wird, wobei die gesamte neue Fahrkurve gleichmäßig im Ganzen so verschoben wird, dass die Kontur der neuen Fahrkurve in sich unverändert bleibt,
(x) geprüft wird, ob die verschobene Fahrkurve innerhalb des erlaubten Fahrstreifens liegt,
(xi) zutreffendenfalls die verschobene Fahrkurve als bisherige Fahrkurve festgelegt wird und die Verfahrensschritte (iv) bis (vii) erneut durchlaufen werden und
(xii) anderenfalls die bisherige Fahrkurve die ermittelte Fahrkurve (400) bildet, und(xiii) das Fahrzeug entlang dieser ermittelten Fahrkurve (400) gelenkt wird;
wobei beim Verteilen der größten Krümmungen auf die zugehörigen Stützpunkte (402, 403, 404) bzw. Lenkpunkte und die entlang der bisherigen Fahrkurve benachbarten Stützpunkte (402, 403, 404) bzw. Lenkpunkte eine Lageänderung der neuen Fahrkurve gegenüber der bisherigen Fahrkurve ausschließlich im Bereich der Stützpunkte (402, 403, 404) bzw. Lenkpunkte, auf die sich das Verteilen erstreckt, vorgenommen wird; wobei die Krümmung auf den zugehörigen Stützpunkt bzw. Lenkpunkt und zumindest auf den entlang der Fahrkurve unmittelbar voraufgehenden und nachfolgenden Stützpunkt bzw. Lenkpunkt verteilt wird, wozu Schritt (v) folgende Teilschritte umfasst:
• die Krümmung am voraufgehenden und nachfolgenden Stützpunkt bzw. Lenkpunkt wird um je die Hälfte einer vorbestimmten Krümmungsänderung vergrößert und
• die Krümmung am zugehörigen Stützpunkt bzw. Lenkpunkt wird um die vorbestimmte Krümmungsänderung verringert,
• wobei ein Anfangswert der vorbestimmten Krümmungsänderung derart bemessen wird, dass die zweite Ableitung der Krümmung entlang der Fahrkurve am zugehörigen Stützpunkt bzw. Lenkpunkt Null ist,
• ein Maximum einer durch die vorbestimmte Krümmungsänderung bewirkten Lageänderung der neuen Fahrkurve im Bereich des voraufgehenden, zugehörigen und nachfolgenden Stützpunkts bzw. Lenkpunkts wird ermittelt,
• und es wird geprüft, ob die neue Fahrkurve an diesem Maximum der Lageänderung außerhalb des erlaubten Fahrstreifens liegt,
• zutreffendenfalls wird durch Verringerung der vorbestimmten Krümmungsänderung das Maximum der Lageänderung auf eine Lage innerhalb des erlaubten Fahrstreifens verringert, und
• die vorbestimmte und gegebenenfalls verringerte Krümmungsänderung wird der Bestimmung der neuen Fahrkurve zu Grunde gelegt;
wobei die vorgebbaren Abstände der Lenkpunkte zueinander und zu den Stützpunkten (402, 403, 404) entlang der Strecke (401) auf wenigstens einen ersten Wert festgesetzt werden, und wobei diese Abstände während des Durchführens des Verfahrens (100; 200) verringert werden.

2. Verfahren (100; 200) nach Anspruch 1, **dadurch gekennzeichnet, dass** die vorgebbaren Abstände der Lenkpunkte zueinander entlang der Strecke (401) mit Abständen der Stützpunkte (402, 403, 404) zu ihren benachbarten Lenkpunkten wenigstens nahezu übereinstimmen.

3. Steueranordnung (300) ausgebildet zum Durchführen eines Verfahrens (100; 200) zum Ermitteln einer Fahrkurve (400) nach Anspruch 1 oder 2, wobei der Steueranordnung (300) Daten zuführbar sind, die eine als durch Stützpunkte (402, 403, 404) aufgespannter Polygonzug vorgegebene Strecke (401) sowie eine dieser Strecke (401) zugeordnete Fahrbahnbreite (fb) beschreiben, wobei Strecke (401) und zugeordnete Fahrbahnbreite (fb) einen erlaubten Fahrstreifen bilden, umfassend
• eine Diskretisierungsstufe (301) zum Festlegen von Lenkpunkten in vorgebbaren Abständen entlang der Strecke (401) zwischen den Stützpunkten (402, 403, 404) und zum Zuordnen einer aus dem Verlauf der Strecke (401) resultierenden Krümmung zu jedem Lenkpunkt und jedem Stützpunkt, so dass sich entlang der Strecke (401) eine Abfolge von Krümmungen ergibt,
• eine Fahrkurvenermittlungsstufe (302) mit
∘ einer Speicherstufe (303) zum Festlegen und/oder Speichern der Strecke (401), der neuen Fahrkurve oder der verschobenen Fahrkurve als bisherige Fahrkurve und zum Eingeben der bisherigen Fahrkurve in eine Rechenstufe (304),
∘ ber Rechenstufe (304) zum
▪ Auswählen der Stützpunkte (402, 403, 404) und Lenkpunkte mit den größten Krümmungen entlang der bisherigen Fahrkurve,
▪ Verteilen dieser größten Krümmungen auf die zugehörigen Stützpunkte (402, 403, 404) bzw. Lenkpunkte und den zugehörigen Stützpunkten (402, 403, 404) bzw. Lenkpunkten entlang der bisherigen Fahrkurve benachbarte Stützpunkte (402, 403,404) bzw. Lenkpunkte und dadurch Verringern dieser Krümmungen und
▪ Bestimmen einer neuen Fahrkurve mit der dadurch gebildeten neuen Abfolge von Krümmungen,
∘ einer ersten Prüfstufe (305) zum Prüfen, ob die neue Fahrkurve innerhalb des erlaubten Fahrstreifens liegt,
∘ einer zweiten Prüfstufe (306) zum Erzeugen einer verschobenen Fahrkurve durch insgesamtes Verschieben der neuen Fahrkurve in eine zum erlaubten Fahrstreifen mittlere Lage und zum Prüfen, ob die verschobene Fahrkurve innerhalb des erlaubten Fahrstreifens liegt, und
∘ einer Ausgabestufe (307) zum Ausgeben der bisherigen Fahrkurve als ermittelte Fahrkurve (400) sowie
• eine Lenkeinrichtung (308) zum Lenken eines Fahrzeugs entlang der ermittelten Fahrkurve (400).

4. Fahrzeug, aufweisend eine Steueranordnung (300) nach Anspruch 3.

5. Computerprogrammprodukt, aufweisend Programmteile zum Ausführen eines Verfahrens (100; 200) nach Anspruch 1 oder 2.

## Claims

1. Method (100; 200) for determining a driving curve (400) from a route (401) which is predefined as a polygonal progression spanning reference points (402, 403, 404), which route (401) forms a permitted driving lane (102) with a carriageway width (fb) assigned thereto, and for steering a vehicle along the determined driving curve (400),
wherein
(i) steering points are defined at predefinable distances between the reference points (402, 403, 404) along the route (401),
(ii) each steering point and each reference point are assigned a curvature which results from the profile of the route (401), with the result that a sequence of curvatures is produced along the route (401),
(iii) the route (401) is defined as a previous driving curve,
(iv) the reference points (402, 403, 404) and steering points with the largest curvatures are selected along the previous driving curve,
(v) by distributing these largest curvatures among the associated reference points (402, 403, 404) and/or steering points and reference points (402, 403, 404) and/or steering points which are adjacent to the associated reference points (402, 403, 404) and/or steering points along the previous driving curve these curvatures are reduced,
(vi) a new driving curve is determined with the new sequence of curvatures which are formed as a result,
(vii) it is checked whether the new driving curve lies within the permitted driving lane,
(viii) if this is the case, the new driving curve is defined as a previous driving curve, and the method steps (iv) to (vii) are run through again,
(ix) otherwise, a shifted driving curve is generated by overall shifting (vs) of the new driving curve into a central position with respect to the permitted driving lane, wherein the overall new driving curve is shifted uniformly as a whole in such a way that the contour of the new driving curve remains unchanged per se,
(x) it is checked whether the shifted driving curve lies within the permitted driving lane,
(xi) if this is the case, the shifted driving curve is defined as a previous driving curve, and the method steps (iv) to (vii) are run through again, and
(xii) otherwise the previous driving curve forms the determined driving curve (400), and
(xiii) the vehicle is steered along this determined driving curve (400);
wherein during the distribution of the largest curvatures among the associated reference points (402, 403, 404) and/or steering points and the reference points (402, 403, 404) and/or steering points which are adjacent along the previous driving curve a change in position of the new driving curve with respect to the previous driving curve is carried out exclusively in the region of the reference points (402, 403, 404) and/or steering points to which the distribution extends;
wherein the curvature is distributed to the associated reference point and/or steering point and at least to the directly preceding and subsequent reference point and/or steering point along the driving curve, for which purpose
step (v) comprises the following sub-steps:
• the curvature at the preceding and subsequent reference point and/or steering point is increased by in each case half a predetermined change in curvature, and
• the curvature at the associated reference point and/or steering point is reduced by the predetermined change in curvature,
• wherein an initial value of the predetermined change in curvature is dimensioned in such a way that the second derivation of the curvature along the driving curve at the associated reference point and/or steering point is zero,
• a maximum of a change in position of the new driving curve, which is brought about by the predetermined change in curvature, in the region of the preceding, associated and subsequent reference point and/or steering point is determined,
• and it is checked whether the new driving curve at this maximum of the change in position lies outside the permitted driving lane,
• if this is the case, by reducing the predetermined change in curvature the maximum of the change in position is reduced to a position within the permitted driving lane, and
• the predetermined and, if appropriate, reduced change in curvature is used as the basis for the determination of the new driving curve;
wherein the predefinable distances between the steering points and between the steering points and the reference points (402, 403, 404) along the route (401) are set to at least a first value, and wherein these distances are reduced during the execution of the method (100; 200).

2. Method (100; 200) according to Claim 1, **characterized in that** the predefinable distances between the steering points along the route (401) at least virtually correspond to distances of the reference points (402, 403, 404) from their adjacent steering points.

3. Control arrangement (300) designed to carry out a method (100; 200) for determining a driving curve (400) according to Claim 1 or 2, wherein data which describes a route (401) predefined as a polygonal progression spanning reference points (402, 403, 404) and a carriageway width (fb) assigned to this route (401) can be supplied to the control arrangement (300), wherein the route (401) and the assigned carriageway width (fb) form a permitted driving lane, comprising
• a discretization stage (301) for defining steering points at predefinable distances between the reference points (402, 403, 404) along the route (401), and for assigning a curvature which results from the profile of the route (401) to each steering point and each reference point, with the result that a sequence of curvatures is produced along the route (401),
• a driving curve-determining stage (302) having
∘ a storage stage (303) for defining and/or storing the route (401), the new driving curve or the shifted driving curve as a previous driving curve and for inputting the previous driving curve into a computing stage (304),
∘ the computing stage (304) for
▪ selecting the reference points (402, 403, 404) and steering points with the largest curvatures along the previous driving curve,
▪ distributing these largest curvatures among the associated reference points (402, 403, 404) and/or steering points and reference points (402, 403, 404) and/or steering points which are adjacent to the associated reference points (402, 403, 404) and/or steering points along the previous driving curve, and as a result reducing these curvatures, and
▪ determining a new driving curve with the new sequence of curvatures which are formed as a result, ∘ a first checking stage (305) for checking whether the new driving curve lies within the permitted driving lane,
∘ a second checking stage (306) for generating a shifted driving curve by overall shifting of the new driving curve into a central position with respect to the permitted driving lane, and for checking whether the shifted driving curve lies within the permitted driving lane, and
∘ an output stage (307) for outputting the previous driving curve as a determined driving curve (400), and
• a steering device (308) for steering a vehicle along the determined driving curve (400).

4. Vehicle having a control arrangement (300) according to Claim 3.

5. Computer program product having program parts for executing a method (100; 200) according to Claim 1 or 2.

## Revendications

1. Procédé (100 ; 200) pour déterminer une courbe de circulation (400) à partir d'un trajet (401) prédéfini sous la forme d'un tracé polygonal tendu à travers des points de référence (402, 403, 404), lequel forme, avec une largeur de voie de circulation (fb) qui lui est associée, une bande de circulation autorisée (102), et pour diriger un véhicule le long de la courbe de circulation (400) déterminée,
(i) des points de changement de direction étant définis à des écarts pouvant être prédéterminés le long du trajet (401) entre les points de référence (402, 403, 404),
(ii) une courbure résultant du tracé du trajet (401) étant associée à chaque point de changement de direction et à chaque point de référence, de manière à obtenir une séquence de courbures le long du trajet (401),
(iii) le trajet (401) étant défini comme courbe de circulation passée,
(iv) les points de référence (402, 403, 404) et les points de changement de direction ayant les plus grandes courbures étant sélectionnés le long de la courbe de circulation passée,
(v) ces courbures étant réduites en distribuant ces courbures les plus grandes sur les points de référence (402, 403, 404) ou les points de changement de direction associés et les points de référence (402, 403, 404) ou les points de changement de direction associés le long des points de référence (402, 403, 404) ou des points de changement de direction voisins de la courbe de circulation passée,
(vi) une nouvelle courbe de circulation étant déterminée avec la nouvelle séquence de courbures ainsi formée,
(vii) un contrôle étant effectué pour vérifier si la nouvelle courbe de circulation se trouve à l'intérieur de la bande de circulation autorisée,
(viii) le cas échéant, la nouvelle courbe de circulation est définie comme courbe de circulation passée et les étapes de procédé (iv) à (vii) sont répétées,
(ix) le cas contraire, une courbe de circulation décalée est produite par un décalage global (vs) de la nouvelle courbe de circulation dans une position centrale par rapport à la bande de circulation autorisée, la nouvelle courbe de circulation totale étant décalée de manière homogène dans son ensemble de telle sorte que le profil de la nouvelle courbe de circulation en elle-même reste inchangée,
(x) un contrôle étant effectué pour vérifier si la courbe de circulation décalée se trouve à l'intérieur de la bande de circulation autorisée,
(xi) le cas échéant, la courbe de circulation décalée est définie comme courbe de circulation passée et les étapes (iv) à (vii) sont répétées et
(xii) le cas contraire, la courbe de circulation passée forme la courbe de circulation déterminée (400), et (xiii) le véhicule est dirigé le long de cette courbe de circulation déterminée (400) ;
lors de la distribution des courbures les plus grandes sur les points de référence (402, 403, 404) ou les points de changement de direction associés et les points de référence (402, 403, 404) ou les points de changement de direction voisins le long de la courbe de circulation passée, un changement de position de la nouvelle courbe de circulation par rapport à la courbe de circulation passée étant exclusivement réalisé dans la zone des points de référence (402, 403, 404) ou des points de changement de direction sur lesquels s'étend la distribution ;
la courbure étant distribuée sur le point de référence ou le point de changement de direction associé et au moins sur le point de référence ou le point de changement de direction directement précédent et suivant le long de la courbe de circulation, l'étape (v) comprenant à cet effet les étapes partielles suivantes :
* la courbure au niveau du point de référence ou point de changement de direction précédent et suivant est agrandie respectivement de la moitié d'un changement de courbure prédéfini et
* la courbure au niveau du point de référence ou point de changement de direction associé est réduite du changement de courbure prédéfini,
* une valeur initiale du changement de courbure prédéfini étant dimensionnée de telle sorte que la deuxième division de la courbure le long de la courbe de circulation au niveau du point de référence ou point de changement de direction associé est nulle,
* un maximum d'un changement de position provoqué par le changement de courbure prédéfini de la nouvelle courbe de circulation dans la zone du point de référence ou du point de changement de direction précédent, associé et suivant est déterminé, et
* un contrôle est effectué pour vérifier si la nouvelle courbe de circulation, au niveau de ce maximum du changement de position, se trouve à l'extérieur de la bande de circulation autorisée,
* le cas échéant, le maximum du changement de position est réduit à une position à l'intérieur de la bande de circulation autorisée en réduisant le changement de courbure prédéfini, et
* le changement de courbure prédéfini et éventuellement réduit sert de base à la détermination de la nouvelle courbe de circulation ;
les écarts pouvant être prédéterminés le long du trajet (401) des points de changement de direction entre eux et par rapport aux points de référence (402, 403, 404) étant fixés à au moins une première valeur, et ces écarts étant réduits pendant la mise en oeuvre du procédé (100 ; 200).

2. Procédé (100 ; 200) selon la revendication 1, **caractérisé en ce que** les écarts pouvant être prédéterminés le long du trajet (401) des points de changement de direction entre eux coïncident au moins approximativement avec les écarts entre les points de référence (402, 403, 404) et leurs points de changement de direction voisins.

3. Arrangement de commande (300), configuré pour mettre en oeuvre un procédé (100 ; 200) pour déterminer une courbe de circulation (400) selon la revendication 1 ou 2, des données pouvant être acheminées à l'arrangement de commande (300), lesquelles décrivent un trajet (401) prédéfini sous la forme d'un tracé polygonal tendu à travers des points de référence (402, 403, 404) ainsi qu'une largeur de voie de circulation (fb) associée à ce trajet (401), le trajet (401) et la largeur de voie de circulation (fb) associée formant une bande de circulation autorisée, comprenant,
* un étage de discrétisation (301) destiné à définir des points de changement de direction à des écarts pouvant être prédéterminés le long du trajet (401) entre les points de référence (402, 403, 404) et à associer une courbure résultant du tracé du trajet (401) à chaque point de changement de direction et à chaque point de référence, de manière à obtenir une séquence de courbures le long du trajet (401),
* un étage de détermination de la courbe de circulation (302) comprenant
∘ un étage de mémorisation (303) destiné à définir et/ou à enregistrer le trajet (401), la nouvelle courbe de circulation ou la courbe de circulation décalée en tant que courbe de circulation passée et pour appliquer la courbe de circulation passée à l'entrée d'un étage de calcul (304),
∘ l'étage de calcul (304) destiné à
+ sélectionner les points de référence (402, 403, 404) et les points de changement de direction ayant les plus grandes courbures le long de la courbe de circulation passée,
+ distribuer ces courbures les plus grandes sur les points de référence (402, 403, 404) ou les points de changement de direction associés et les points de référence (402, 403, 404) ou les points de changement de direction associés le long des points de référence (402, 403, 404) ou des points de changement de direction voisins de la courbe de circulation passée et ainsi réduire ces courbures et
+ déterminer une nouvelle courbe de circulation avec la nouvelle séquence de courbures ainsi formée,
∘ un premier étage de contrôle (305) destiné à vérifier si la nouvelle courbe de circulation se trouve à l'intérieur de la bande de circulation autorisée,
∘ un deuxième étage de contrôle (306) destiné à générer une courbe de circulation décalée par un décalage global de la nouvelle courbe de circulation dans une position centrale par rapport à la bande de circulation autorisée, et destiné à vérifier si la courbe de circulation décalée se trouve à l'intérieur de la bande de circulation autorisée, et
∘ un étage de sortie (307) destiné à délivrer la courbe de circulation passée en tant que courbe de circulation déterminée (400), et
* un dispositif de changement de direction (308) destiné à diriger un véhicule le long de la courbe de circulation déterminée (400).

4. Véhicule, possédant un arrangement de commande (300) selon la revendication 3.

5. Produit de programme informatique, possédant des parties de programme destinées à mettre en oeuvre un procédé (100 ; 200) selon la revendication 1 ou 2.
